# EUROPEAN PATENT SPECIFICATION

(11) **EP 1 063 836 B1**
(45) Date of publication and mention of the grant of the patent: **25.01.2006**
(21) Application number: 00113401.4
(22) Date of filing: 23.06.2000
(51) Int. Cl.: H04M 1/725

(54) **Method and system for controlling synchronization of a digital european cordless telephone**
Verfahren und System zur Steuerung der Synchronisierung eines europäisches digitales schnurloses Telefongeräts
Méthode et système de contrôle de la synchronisation d'un téléphone numérique sans fil européen

(30) Priority: 24.06.1999 KR 9923999
(43) Date of publication of application: 27.12.2000
(73) Proprietor: SAMSUNG ELECTRONICS CO., LTD., Suwon-City, Kyungki-do (KR)
(72) Inventor: Lee, Je-Kyoung, Dokyang-gu, Koyang-shi, Kyonggi-do (KR)
(74) Representative: Grünecker, Kinkeldey, Stockmair & Schwanhäusser Anwaltssozietät

(56) References cited:
- PILGER U: "STRUKTUR DES DECT-STANDARDS" NACHRICHTENTECHNIK ELEKTRONIK, VEB VERLAG TECHNIK. BERLIN, DE, vol. 42, no. 1, 1992, pages 23-29, XP000279214 ISSN: 0323-4657

## Description

The invention relates to synchronization between a handset unit and a base unit in a digital European cordless telephone (DECT), and more particularly to a method and system for controlling synchronization between a handset unit and a base unit which are made by different manufacturers to have different synchronization characteristics.

The method for synchronizing a conventional DECT is characterized in that the dummy channel is caused to move to the traffic channel established between the handset unit and the base unit in order to save the power. In this case, there often occurs the phenomenon of a particular handset unit losing the synchronization with the base unit as the handset unit keeps on detecting the dummy channel having moved to the traffic channel.

For example, when a base unit made by a first company, for example SIEMENS, is used along with a handset unit made by a second company, for example SAMSUNG ELECTRONICS, the base unit makes the dummy channel disappear by moving it to the traffic channel which is established by the handset unit, after a predetermined time during which both channels coexist. Although the base unit sends the information of the dummy channel position to the handset unit, it indicates another bearer channel as the position of the traffic channel immediately after establishing the traffic channel. However, when the traffic channel is cut off, it is changed to the dummy channel with its information to the dummy channel position. Then, since the handset moves to the dummy channel or the other bearer channel according to the positional information, it may lose the synchronization with the base unit, and therefore, keeps on detecting the disappeared dummy channel for synchronization with the base unit, thus increasing the power consumption.

US-A-5 416 779 relates to a time division duplex telecommunication system. A communication procedure suitable for a cordless telephone system involves time division duplex radio communication between a headset and a base station, using alternative bursts of transmission over a single radio channel. Once a radio link has been set up, initial transmissions carry a synchronization logical channel S and a signaling logical channel D multiplexed together, but the link may switch to bursts carrying a communication logical channel B for the speech data and the signaling logical channel D. First synchronization is achieved by asynchronous detection of words in a synchronization channel S. These words have bit patterns reducing the probability of incorrect asynchronous detection of them. If one part ceases to receive handset signals from the other, it transmits a special signal, informing the other part. This enables both parts to detect the failure of a link at substantially the same time, so that their actions to re-establish the link are synchronized.

US-A-5 754 956 relates to a methodical scanning method and apparatus for portable radiotelephones. A radiotelephone handset includes an antenna and receiver for receiving a control channel from a plurality of base stations. A time division multiple access controller circuit coupled to the receiver stores all received control channel information in a capture data buffer. Under control of a processor, the handset identifies as candidate suitable base stations those base stations having acceptable received signal strength, acceptable identify or system capability. From the candidates, the handset chooses a suitable base station having acceptable signal quality, access rights and system capability and synchronizes communication with the suitable base station.

It is the object of the present invention to provide a method and system for controlling synchronization of a DECT station so as to continuously keep the synchronization between the handset unit and the base unit which are made by different manufacturers to be different in synchronization.

This object is solved by the invention claimed in the independent claims. Preferred embodiments are subject matters of dependent claims.

It is an advantage of the invention to provide a method and system for controlling synchronization of a DECT station so as to prevent undesired power consumption in the establishment of synchronization between the handset unit and base unit with different channel establishing characteristics.

According to an aspect of the invention, a method for controlling synchronization of a DECT station having a base unit capable of registering a plurality of handset units, comprises the steps of sending the dummy bearer channel information from the base unit to a handset unit, said dummy bearer channel information being used by said handset unit to synchronize to said base unit, storing the received dummy bearer channel information into a candidate buffer of the handset unit, changing the dummy bearer channel information receiving position to a position corresponding to the information stored in the candidate buffer in case that a cyclic redundancy check error occurs continuously at least a predetermined number of times, and sending dummy bearer channel information from the base unit to the handset unit at the changed position.

According to another aspect of the invention, a method for controlling synchronization of a DECT station having a base unit capable of registering a plurality of handset units, comprises the steps of establishing a traffic channel, continuously performing a cyclic redundancy check for a dummy channel to determine whether the traffic channel disappears during a predetermined time period, said dummy channel being used for synchronizing to the base unit; and moving the dummy channel to the traffic channel after expiration of the predetermined time period, or before expiration of the predetermined time period if a cyclic redundancy check error continuously occurs at least a predetermined number of times, the slot and channel information of the moved dummy channel being stored into a buffer.

The invention will now be described more specifically with reference to the drawings attached only by way of example.
Fig. 1 is a schematic diagram showing the states of establishing the dummy and traffic channels varying with time according to the synchronization between the handset unit and base unit in a DECT system;
Fig. 2 is a flow chart illustrating the process of controlling synchronization of a DECT station according to a first preferred embodiment of the invention; and
Fig. 3 is a flow chart illustrating the process of controlling synchronization of a DECT station according to a second preferred embodiment of the invention.

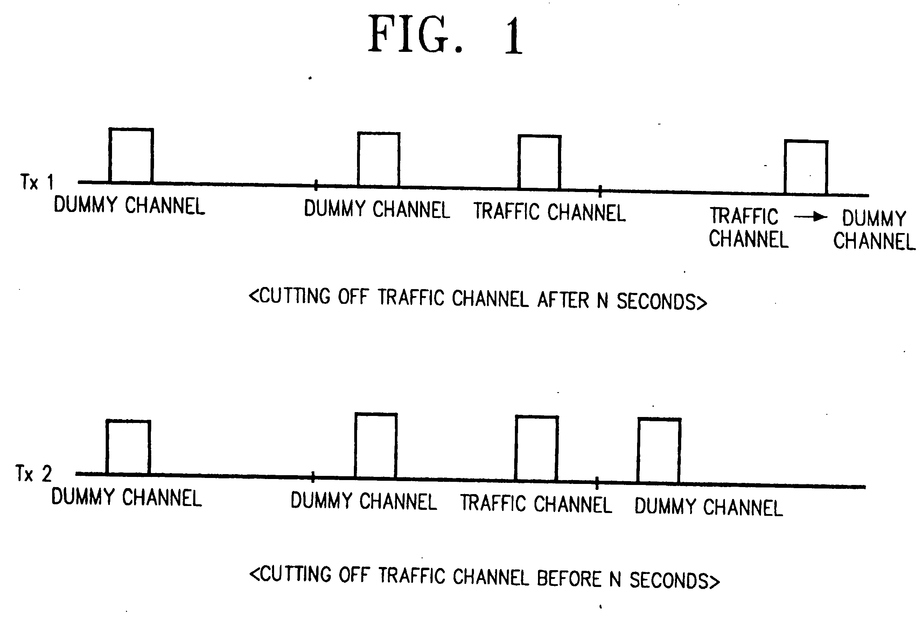

Referring to Fig. 1, the two scenarios Tx1 and Tx2 respectively illustrate the channel states when cutting off the traffic channel after or before a predetermined time N seconds, in a DECT system embodying this invention. In the Tx1 case, the bearer information of the dummy bearer indicates the dummy channel position, containing the channel and slot information to synchronize the handset unit. Then, the dummy and traffic bearers coexist during a predetermined time period of N seconds, when both inform another bearer of the position of the traffic bearer. After N seconds, only the traffic channel remains while the dummy channel has disappeared. In this case, if the handset unit cuts off the traffic channel along with sending another bearer information, the traffic channel position becomes the dummy channel, provided with the dummy channel information.

Alternatively, in the Tx2 case, the base unit sends the bearer information of the dummy bearer through the dummy channel to the handset unit. Then, the dummy and traffic channels coexist for the duration of N seconds, when both inform another bearer of the traffic bearer position. In this case, if the traffic channel is cut off before expiration of N seconds, it returns to the dummy channel position, sending the information of the dummy channel position. As a result, the DECT system does not provide means for continuously maintaining the synchronization between the handset unit and the base unit to cope with these situations.

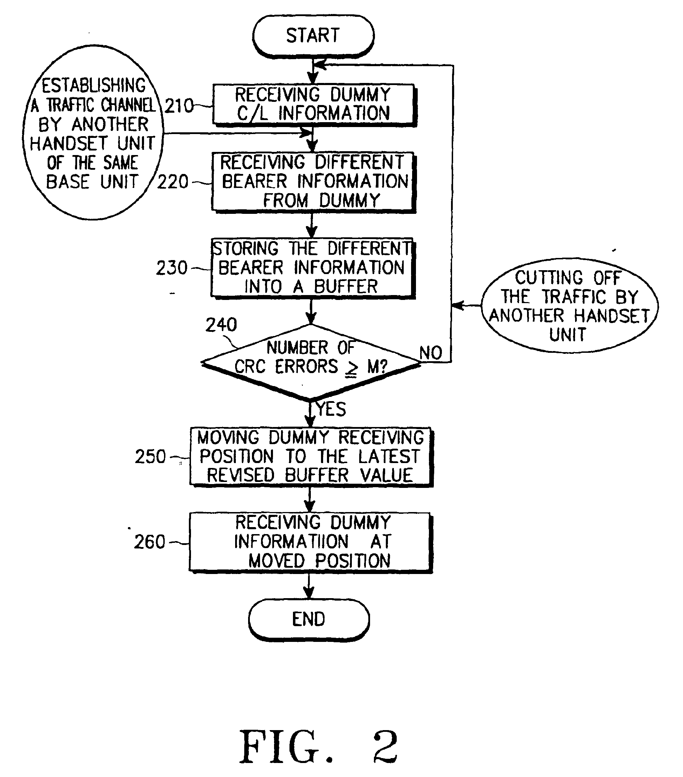

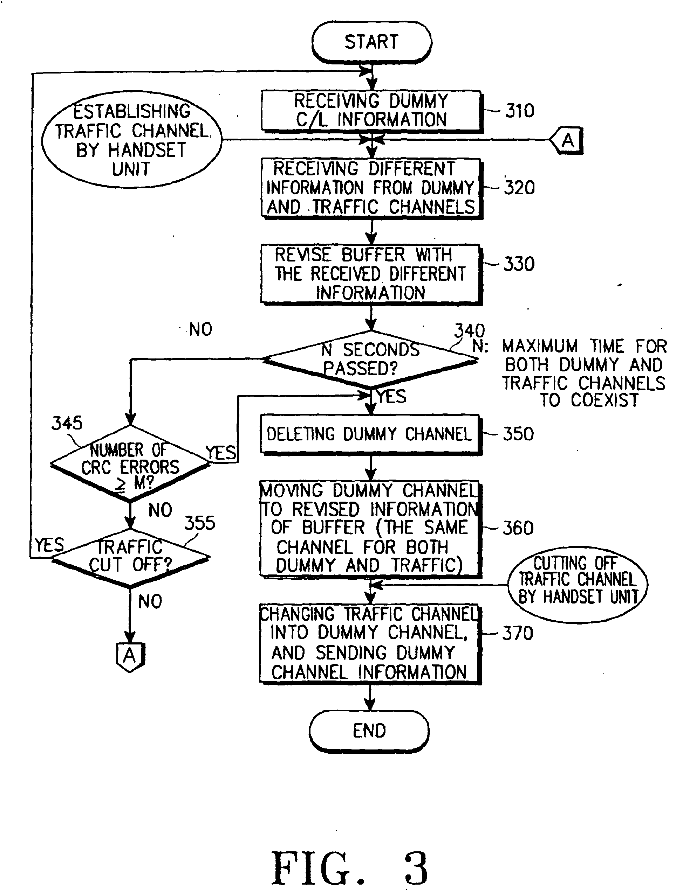

Hereinafter will be described the inventive method for continuously maintaining the synchronization between the handset unit and the base unit even in the above situations, and employing all kinds of handset units, in connection with Figs 2 and 3.

Referring to Fig. 2, a handset unit receives dummy channel information from a base unit in step 210. In this case, when another handset unit establishes a traffic channel to the base unit, it receives bearer information from the base unit in step 220 which bearer information is different from the dummy bearer information, and stores the received different bearer information into a candidate buffer in step 230, which is revised with the latest information. At decision 240, it is determined whether the CRC error occurs at a frequency equal to or greater than a predetermined number of times M. If there is detected no CRC error at decision 240 indicating the cutting off of the traffic by said another handset, the process returns to step 210. This represents the normal operation of not losing the synchronization.

Alternatively, if the CRC error occurs M times or more frequently at decision 240, the handset unit moves the dummy receiving position to the latest revised buffer value. Namely, the fact that the number of CRC errors is equal to or greater than M represents losing of the synchronization, and the dummy receiving position is revised with reference to the different bearer information of the previously revised buffer in order to prevent losing of the synchronization. Finally, the handset unit receives the dummy information at the moved position in step 260, not losing the synchronization with the base unit even when another handset establishes a traffic channel.

Fig. 3 illustrates the process of controlling synchronization in case the handset unit deliberately cuts off the traffic channel after establishment. In step 310, the handset unit receives dummy channel information from the base unit. When the handset unit establishes a traffic channel, it receives different information from the dummy and traffic channels in step 320, which is used to revise the candidate buffer in step 330. Then, it is determined at decision 340 whether the time for both dummy and traffic channels to coexist passes a predetermined time of N seconds. If it passes N seconds at decision 340, the previous dummy channel is deleted in step 350, and the dummy channel moves to the revised information of the buffer. In this case, the dummy channel becomes the same as the traffic channel. Then, if the handset unit cuts off the traffic channel, the base unit changes the traffic channel into the dummy channel in step 370, and sends the dummy channel information.

Alternatively, if it does not pass N seconds at decision 340, it is determined at decision 345 whether the CRC error continuously occurs at least a predetermined number of times M. This is to check whether the handset unit normally receives the dummy information from the base unit. If the number of CRC errors is equal to or greater than M, the process returns to step 350. However, if it is not equal to or greater than M at decision 345, it is determined at decision 355 whether the traffic channel has been cut off. If it has been cut off, the process returns to step 310. Otherwise, the process returns to step 320.

As described above, the inventive method makes all kinds of handset units meeting the recommended specification of a DECT system used compatibly, so that both traffic and dummy modes may be effective without losing synchronization even when another handset unit establishes a traffic channel after establishment of a traffic channel by a particular handset unit of the same base unit. This also provides a reduction of the power consumption.

## Claims

1. A method for controlling synchronization of a DECT station having a base unit capable of registering a plurality of handset units, the method comprising:
sending (210, 220) dummy bearer channel information from said base unit to a handset unit, said dummy channel being used by said handset unit to synchronize to said base unit;
storing (230) the received dummy bearer channel information into a candidate buffer of the handset unit;
changing (250) the dummy bearer channel information receiving position to a position corresponding to the information stored in said candidate buffer in case that a cyclic redundancy check error occurs continuously at least a predetermined number of times; and
sending (260) dummy bearer channel information from the base unit to the handset unit at the changed position.

2. The method as claimed in claim 1 wherein the step of sending (210, 220) the dummy bearer channel information is repeated in case the cyclic redundancy check error does not occur said predetermined number of times, indicating the cutting off of a traffic channel by another handset unit of the same base unit.

3. The method as claimed in claim 1 or 2 wherein the step of storing (230) the received dummy bearer channel information is performed when another handset unit establishes a traffic channel to the same base unit.

4. A method for controlling synchronization of a DECT station having a base unit capable of registering a plurality of handset units, the method comprising:
establishing a traffic channel;
continuously performing (345) a cyclic redundancy check for a dummy channel to determine whether said traffic channel disappears during a predetermined time period, said dummy channel being used for synchronizing to said base unit; and
moving (360) said dummy channel to said traffic channel after expiration of said predetermined time period, or before expiration of said predetermined time period if a cyclic redundancy check error continuously occurs at least a predetermined number of times, the slot and channel information of the moved dummy channel being stored into a buffer.

5. A system for controlling the synchronization of a DECT station having a base unit capable of registering a plurality of handset units, the system comprising:
means for sending dummy bearer channel information from said base unit to a handset unit, said dummy bearer channel information being used by said handset unit to synchronize to said base unit;
a candidate buffer in the handset unit for storing the received dummy bearer channel information;
means for changing the dummy bearer channel information receiving position to a position corresponding to the information stored in said candidate buffer in case that a cyclic redundancy checking error occurs continuously at least a predetermined number of times; and
means for sending dummy bearer channel information from the base unit to the handset unit at the changed position.

6. The system as claimed in claim 5 wherein said means for sending repeats sending the dummy bearer channel information in case the cyclic redundancy check error does not occur said predetermined number of times, indicating the cutting off of a traffic channel by another handset unit of the same base unit.

7. The system as claimed in claim 5 or 6 wherein the received dummy bearer channel information is stored when another handset unit establishes a traffic channel to the same base unit.

8. A system for controlling synchronization of a DECT station having a base unit capable of registering a plurality of handset units, the system comprising:
means for establishing a traffic channel;
means for continuously performing a cyclic redundancy check for a dummy channel, said dummy channel being used for synchronizing to said base unit;
means for moving said dummy channel to said traffic channel after expiration of said predetermined time period, or before expiration of said predetermined time period if a cyclic redundancy check error continuously occurs at least a predetermined number of times; and
a buffer for storing slot and channel information of said moved dummy channel.

## Patentansprüche

1. Verfahren zum Steuern von Synchronisation einer DECT-Station, die eine Basiseinheit hat, die in der Lage ist, eine Vielzahl von Handapperateinheiten zu registrieren, wobei das Verfahren umfasst:
Senden (210, 220) von Schein-Trägerkanalinformationen von der Basiseinheit zu einer Handapparateinheit, wobei der Scheinkanal durch die Handapparateinheit verwendet wird, um mit der Basiseinheit zu synchronisieren;
Speichern (230) der empfangenen Schein-Trägerkanalinformationen in einem Kandidaten-Pufferspeicher der Handapparateinheit;
Ändern (250) der Empfangsposition der Schein-Trägerkanalinformationen auf eine Position, die den in dem Kandidaten-Pufferspeicher gespeicherten Informationen entspricht, wenn ein Fehler bei zyklischer Blockprüfung kontinuierlich wenigstens mit einer vorgegebenen Häufigkeit auftritt; und
Senden (260) von Schein-Trägerkanalinformationen von der Basiseinheit zu der Handapparateinheit an der veränderten Position.

2. Verfahren nach Anspruch 1, wobei der Schritt des Sendens (210, 220) der Schein-Trägerkanalinformationen wiederholt wird, wenn der Fehler bei zyklischer Blockprüfung nicht mit der vorgegebenen Häufigkeit auftritt, was das Trennen eines Verkehrskanals durch eine andere Handapparateinheit der gleichen Basiseinheit anzeigt.

3. Verfahren nach Anspruch 1 oder 2, wobei der Schritt des Speicherns (230) der empfangenen Schein-Trägerkanalinformationen durchgeführt wird, wenn eine andere Handapparateinheit einen Verkehrskanal zu der gleichen Basiseinheit einrichtet.

4. Verfahren zum Steuern von Synchronisation einer DECT-Station mit einer Basiseinheit, die in der Lage ist, eine Vielzahl von Handapparateinheiten zu registrieren, wobei das Verfahren umfasst:
Einrichten eines Verkehrskanals;
kontinuierliches Durchführen (345) einer zyklischen Blockprüfung für einen Scheinkanal, um festzustellen, ob der Verkehrskanal während eines vorgegebenen Zeitraums verschwindet, wobei der Scheinkanal zum Synchronisieren mit der Basiseinheit verwendet wird; und
Verschieben (360) des Scheinkanals zu dem Verkehrskanal nach Ablauf der vorgegebenen Zeitdauer oder vor Ablauf der vorgegebenen Zeitdauer, wenn ein Fehler bei zyklischer Blockprüfung kontinuierlich wenigstens mit einer vorgegebenen Häufigkeit auftritt, wobei die Schlitz- und Kanalinformationen des verschobenen Scheinkanals in einem Pufferspeicher gespeichert werden.

5. System zum Steuern der Synchronisation einer DECT-Station mit einer Basiseinheit, die in der Lage ist, eine Vielzahl von Handapparateinheiten zu registrieren, wobei das System umfasst:
eine Einrichtung, die Schein-Trägerkanalinformationen von der Basiseinheit zu einer Handapparateinheit sendet, wobei die Schein-Trägerkanalinformationen von der Handapparateinheit verwendet werden, um mit der Basiseinheit zu synchronisieren;
einen Kandidat-Pufferspeicher in der Handapparateinheit, der die empfangenen Schein-Trägerkanalinformationen speichert;
eine Einrichtung, die die Empfangsposition der Schein-Trägerkanalinformationen auf eine Position ändert, die den in dem Kandidaten-Pufferspeicher gespeicherten Informationen entspricht, wenn ein Fehler bei zyklischer Blockprüfung kontinuierlich mit wenigstens einer vorgegebenen Häufigkeit auftritt; und
eine Einrichtung, die Schein-Trägerkanalinformationen von der Basiseinheit zu der Handapparateinheit an der veränderten Position sendet.

6. System nach Anspruch 5, wobei die Einrichtung zum Senden Senden der Schein-Trägerkanalinformationen wiederholt, wenn der Fehler bei zyklischer Blockprüfung nicht mit der vorgegebenen Häufigkeit auftritt, was das Trennen eines Verkehrskanals durch eine andere Handapparateinheit der gleichen Basiseinheit anzeigt.

7. System nach Anspruch 5 oder 6, wobei die empfangenen Schein-Trägerkanalinformationen gespeichert werden, wenn eine andere Handapparateinheit einen Verkehrskanal mit der gleichen Basiseinheit einrichtet.

8. System zum Steuern von Synchronisation einer DECT-Station mit einer Basiseinheit, die in der Lage ist, eine Vielzahl von Handapparateinheiten zu registrieren, wobei das System umfasst:
eine Einrichtung, die einen Verkehrskanal einrichtet;
eine Einrichtung, die kontinuierlich eine zyklische Blockprüfung für einen Scheinkanal durchführt, wobei der Scheinkanal zum Synchronisieren mit der Basiseinheit verwendet wird;
eine Einrichtung, die den Scheinkanal nach Ablauf der vorgegebenen Zeitdauer oder vor Ablauf der vorgegebenen Zeitdauer auf den Verkehrskanal verschiebt, wenn ein Fehler bei zyklischer Bockprüfung kontinuierlich wenigstens mit einer vorgegebenen Häufigkeit auftritt; und
einen Pufferspeicher, der Schlitz- und Kanalinformationen des verschobenen Scheinkanals speichert.

## Revendications

1. Procédé de commande de la synchronisation d'une station DECT possédant une unité de base capable d'enregistrer une pluralité d'unités terminales, le procédé comprenant les étapes consistant à :
envoyer (210, 220) des informations de canal fictif de ladite unité de base vers une unité terminale, ledit canal fictif étant utilisé par ladite unité terminale pour se synchroniser avec ladite unité de base ;
stocker (230) les informations de canal fictif reçues dans un tampon de candidats potentiels de l'unité terminale ;
remplacer (250) la position de réception d'informations de canal fictif, par une position correspondant aux informations stockées dans ledit tampon de candidats potentiels si une erreur de vérification de redondance cyclique se produit de manière continue, au moins un nombre prédéterminé de fois ; et
envoyer (260) les informations de canal fictif de l'unité de base à l'unité terminale, à la position modifiée.

2. Procédé selon la revendication 1, dans lequel l'étape d'émission (210, 220) des informations de canal fictif est répétée si l'erreur de vérification de redondance cyclique ne se produit pas le nombre prédéterminé de fois, ce qui indique la coupure d'un canal de trafic par une autre unité terminale de la même unité de base.

3. Procédé selon la revendication 1 ou 2, dans lequel l'étape de stockage (230) des informations de canal fictif reçues est exécutée lorsqu'une autre unité terminale établit un canal de trafic vers la même unité de base.

4. Procédé de commande de la synchronisation d'une station DECT possédant une unité de base capable d'enregistrer une pluralité d'unités terminales, le procédé comprenant les étapes consistant à :
établir un canal de trafic ;
exécuter de manière continue (345) une vérification de redondance cyclique pour un canal fictif, afin de déterminer si ledit canal de trafic disparaît pendant une période de temps prédéterminée, ledit canal fictif étant utilisé pour la synchronisation avec ladite unité de base ; et
déplacer (360) ledit canal fictif vers ledit canal de trafic après l'expiration de ladite période de temps prédéterminée, ou avant l'expiration de ladite période de temps prédéterminée si une erreur de vérification de redondance cyclique se produit au moins un nombre prédéterminé de fois, les informations d'intervalle et de canal du canal fictif déplacé étant stockées dans un tampon.

5. Système de commande de la synchronisation d'une station DECT possédant une unité de base capable d'enregistrer une pluralité d'unités terminales, le système comprenant :
un moyen destiné à émettre des informations de canal fictif entre ladite unité de base et une unité terminale, lesdites informations de canal fictif étant utilisées par ladite unité terminale pour se synchroniser avec ladite unité de base ;
un tampon des candidats potentiels, dans l'unité terminale, pour stocker les informations de canal fictif reçues ;
un moyen destiné à remplacer la position de réception des informations de canal fictif, par une position correspondant aux informations stockées dans ledit tampon de candidats potentiels si une erreur de vérification de redondance cyclique se produit de manière continue au moins un nombre prédéterminé de fois ; et
un moyen destiné à envoyer des informations de canal fictif de l'unité de base à l'unité terminale, à la position modifiée.

6. Système selon la revendication 5, dans lequel ledit moyen destiné à envoyer répète l'envoi des informations de canal fictif si l'erreur de vérification de redondance cyclique ne se produit pas ledit nombre prédéterminé de fois, ce qui indique la coupure d'un canal de trafic par une autre unité terminale de la même unité de base.

7. Système selon la revendication 5 ou 6, dans lequel les informations de canal fictif reçues sont stockées lorsqu'une autre unité terminale établit un canal de trafic vers la même unité de base.

8. Système de commande de la synchronisation d'une station DECT possédant une unité de base capable d'enregistrer une pluralité d'unités terminales, le système comprenant :
un moyen destiné à établir un canal de trafic ;
un moyen destiné à exécuter de manière continue une vérification de redondance cyclique pour un canal fictif, ledit canal fictif étant utilisé pour la synchronisation avec ladite unité de base ;
un moyen destiné à déplacer ledit canal fictif vers ledit canal de trafic après l'expiration de ladite période de temps prédéterminée, ou avant l'expiration de ladite période de temps prédéterminée si une erreur de vérification de redondance cyclique se produit de façon continue au moins un nombre prédéterminé de fois ; et
un tampon destiné à stocker les informations d'intervalle et de canal du canal fictif déplacé.
